# EUROPEAN PATENT APPLICATION

(11) **EP 0 816 710 A1**
(43) Date of publication of application: **07.01.1998**
(21) Application number: 96201844.6
(22) Date of filing: 03.07.1996
(51) Int. Cl.: F16F 7/09

(54) **Device comprising elements telescopically slidable with respect to each other with friction for connecting relatively movable bodies**

(71) Applicant: ADLER S.p.A., Rovereto (Trento) (IT)
(72) Inventor: Morone, Alfio, Milano (IT)
(74) Representative: Raimondi, Alfredo, Dott. Ing. Prof.

(57) **Abstract**

Connecting device in particular for elements rotating and oscillating relative to a fixed frame, comprising two elements respectively connected to the fixed frame and to the movable element, in which said elements are coaxial with each other and telescopically slidable one inside the other, the internally slidable part being provided with radial seats extending in the axial direction for containing friction means designed to oppose the relative sliding of the two elements by acting in the radial direction between the said elements as a result of the action of resilient means.

## Description

The present invention relates to a device for connecting a movable element with respect to a fixed base, comprising coaxial means telescopically slidable with respect to each other with friction and means for adjusting said friction.

It is known how, in many sectors of technology, it is necessary to cause the rotation, about their axes, of bodies associated with a fixed support, with respect to which said bodies may also oscillate, tending to become disaligned with respect to said axis of rotation.

An example of such a necessity exists in automatic clothes-washing machines in which the substantially cylindrical drum containing the clothes to be washed rotates, for the washing and centrifuging operations, about its own axis, being suspended from the frame of the washing means via resilient means and the like.

During the rotational movement, the drum tends to oscillate about its axis of rotation on account of the unequal distribution of the load inside the drum, which may be amplified considerably owing to the effects of resonance.

Since this oscillation of the movable body constitutes an undesirable effect for the whole of the machine, the technical problem which is posed is therefore that of providing connecting means designed to limit the amplitude of these oscillations which have negative effects on the machine itself.

In the art it is known of friction devices consisting of springs provided with friction elements at free ends fastened onto corresponding projecting parts of the oscillating body.

These devices, however, have numerous limitations including the complexity of installation and the lack of compactness.

The object of the present invention is therefore to provide a connecting device, in particular for limiting the movements of elements rotating or oscillating with respect to a fixed frame, which is designed to offer resistance to displacement of the movable body with the function of damping the oscillations.

The device according to the invention must moreover be formed by a limited number of parts which are easy and economical to produce and which can be easily assembled together and fitted to washing machines of the conventional type simply and rapidly so as to facilitate the maintenance operations.

These results are obtained by a connecting device in particular for elements rotating and oscillating relative to a fixed frame, comprising two elements which are respectively connected to the fixed frame and to the movable element, in which said elements are coaxial with each other and telescopically slidable one inside the other, the internally slidable part being provided with radial seats extending in the axial direction for containing friction means designed to oppose the relative sliding of the two elements, acting in a radial direction between the said parts as a result of the action of resilient means.

Further details may be obtained from the following description, with reference to the accompanying drawings, in which:
Figure 1 is a longitudinal half-section through an example of embodiment of a device according to the present invention;
Figure 2 is a cross-section along the plane indicated by II-II in Figure 1;
Figure 3 is a cross-section along the plane indicated by III-III in Figure 1;
Figure 4 is a longitudinal half-section through an alternative example of embodiment of the device according to the invention;
Figure 5 is a cross-section along the plane indicated by V-V in Figure 4;
Figure 6 is a cross-section along the plane indicated by VI-VI in Figure 4;
Figure 7 is a cross-section along the plane indicated by VII-VII in Figure 4.

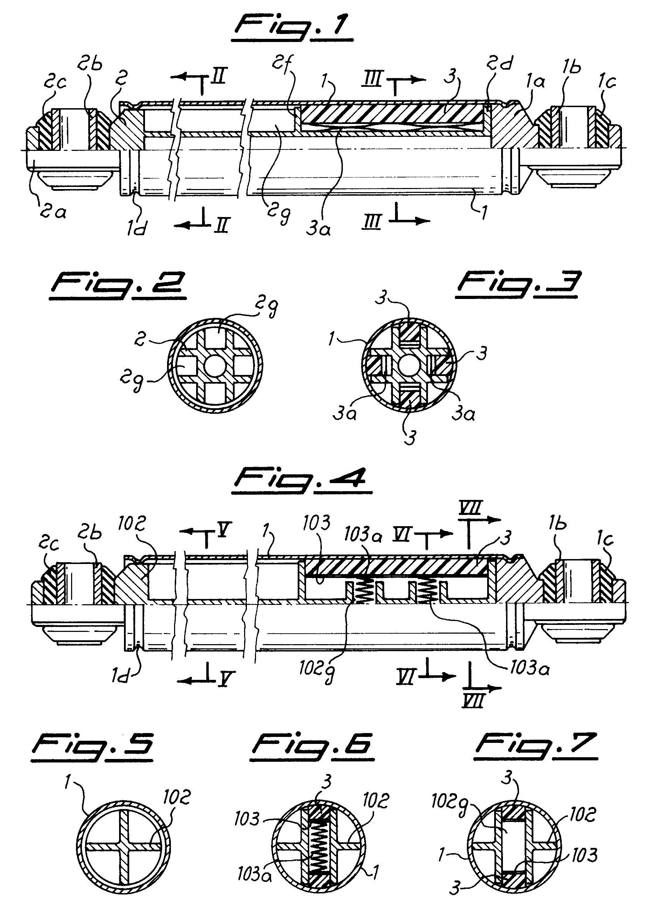

As illustrated in Figures 1 to 3, the connecting device according to the invention consists of a first, substantially tubular element 1 and a second stem-like element 2 slidable inside the tube 1.

One end of the tube 1 is closed by means of a head-piece 1a carrying the bush 1b for attachment to the fixed part of the machine and containing a damping sleeve 1c.

The opposite end of the tube 1 is open and has an annular recess 1d formed on the surface of the tube and designed to cooperate with a corresponding radial ring 2f of the stem 2 described below.

Said stem 2 consists of a cross-shaped rod and has an outer end shaped in the manner of a head-piece 2a, similar to the head-piece 1a, carrying a bush 2b for attachment to the rotating part of the machine by means of a damping sleeve 2c.

The end inside the tube 1 has fitted to it a ring 2d, the axial position of which could be adjustable by means of special threading.

The cross-shaped rod is provided, in an intermediate position, with an additional ring 2f designed to define, together with the said inner end ring 2d, a plurality of seats 2g extending in the longitudinal direction and arranged radially at uniform angular intervals: in the example of Figures 1, 2 and 3, four seats arranged at 90° have been provided.

Each of said seats 2g has housed inside it the friction means consisting of a pad 3 of friction material, such as for example elastomeric material, resting on flat springs 3a reacting against the bottom of the seat 2g of the cross-shaped rod 2; in this way the pad 3 is kept pressed by the springs 3a against the inner wall of the tube 1.

The intermediate ring 2f of the stem 2 moreover has a diameter which is slightly greater than the end ring 2d so as to define an edge designed to cooperate with the said annular recess Id of the tube 1 so as to form an end-of-travel stop which prevents the friction means from coming out of the tube itself.

Operation of the device connecting the fixed part and movable part of a machine assembly is as follows: once the stem 2 and tube 1 have been coupled to one another by forcing the former inside the latter in the axial direction, the head-pieces 1a and 2a are joined respectively to the fixed frame and the rotating body (not shown in the Figures); in this way, when the rotating body tends, owing to the effect of the centrifugal force, to displace its axis of rotation with respect to the centred position, moving the stem 2 for example towards the end of the tube 1, the travel of the stem is braked by the friction caused by rubbing of the pads 3, urged in the radial direction by the respective springs 3a against the tube 1.

In the example of embodiment of Figure 1, the contact surfaces between pads 3 and tube 1 are parallel with one another and the frictional force opposing displacement of the stem 2 is constant, whatever the displacement of the stem itself in the longitudinal direction. Said frictional force could also be adjustable by acting, using known means, on the springs 3a.

As shown in Figures 4 to 7, it is possible to realize the stem 2 in the form of a simplified cross-shaped rod 102 having inside it only two radial seats 102g arranged at 180° with respect to each other and containing the pads 3. The surface of each pad 3 opposite the surface coming into contact with the tube 1 rests on a rigid base 103 against which torsional spring 103a press, arranged at a suitable axial distance from one another, so as to cause the predetermined frictional force between cross-shaped rod 102 and tube 1.

Said torsional springs 103a may be arranged, as illustrated in Figures 4 and 6, between two opposite pads 3, acting on both of them.

Moreover means for adjusting the friction between stem 2 and tube 1 may be provided, substantially consisting of movable parts adjustable on the stem 2, so as to vary the action itself of the springs 3a, 103a, with consequent variation of the radial thrust against the pads 3 which in turn vary their pressure on the tube 1, modifying the overall frictional force.

## Claims

1. Device for connecting a movable element with respect to a fixed base in particular for rotating and oscillating elements, comprising two elements, one of which is connected to the fixed base and the other to the movable element, characterized in that said elements (1, 2) are coaxial with one another and telescopically slidable one inside the other, the slidable part of which having inside it radial seats (2g) extending in the axial direction for containing friction means (3) designed to oppose the relative sliding of the two elements (1, 2), acting in the radial direction between the two elements as a result of the action of resilient means (3a; 103a).

2. Connecting device according to Claim 1, characterized in that one of said slidable elements substantially consists of a tubular section (1) with an end closed by a head-piece (1a) shaped in the manner of a ring or the like.

3. Connecting device according to Claim 1, characterized in that the other of said slidable elements substantially consists of a stem (2) formed by a cross-shaped rod or the like, the opposite ends of which are delimited by transverse rings (2a, 2d).

4. Connecting device according to Claim 1, characterized in that said stem (2) is provided with at least one additional transverse ring (2f) designed to define with said ring (2d) a plurality of radial seats (2g) extending in the axial direction, for housing the friction means (3).

5. Connecting device according to Claim 1, characterized in that said friction means (3) consist of pads made of friction material and resilient means (3; 103) for pressing the latter in the radial direction against the inner surface of the tube (1).

6. Connecting device according to Claim 1, characterized in that said resilient means for pressing the friction pad consist of flat springs (3a) axially arranged in between the pad (3) itself and the bottom of the respective seats of the cross-shaped rod.

7. Friction-type connecting device according to Claim 1, characterized in that said resilient pressing means consist of torsional springs (103a) arranged transversely inside the stem (2) and acting on rigid bases supporting the opposing friction pads.

8. Connecting device according to Claim 1, characterized in that said intermediate ring (2f) has an increased diameter for forming an annular edge designed to cooperate with the annular recess (1d) of the open end of the tube (1) so as to form an end-of-travel element for the stem (2) with respect to the tubular section.

9. Friction-type connecting device according to the preceding claims, characterized in that means may be provided for adjusting the radial action of the springs (3a; 103a) against the pads (3) so as to vary the pressure of said pads (3) against the tube (1), modifying the overall action of the friction.
